(19) Europäisches Patentamt
European Patent Office
Office européen des brevets

(11) EP 0 586 102 B1

(12) **EUROPEAN PATENT SPECIFICATION**

(45) Date of publication and mention
of the grant of the patent:
**14.01.1998 Bulletin 1998/03**

(51) Int. Cl.$^6$: **B01D 39/20**, C04B 35/46

(21) Application number: **93306173.1**

(22) Date of filing: **04.08.1993**

(54) **High-Temperature ceramic filter**

Wärmefester keramischer Filter

Filtre céramique à haute température

(84) Designated Contracting States:
**CH DE GB LI**

(30) Priority: **06.08.1992 JP 231296/92**

(43) Date of publication of application:
**09.03.1994 Bulletin 1994/10**

(73) Proprietors:
• **Bridgestone Corporation**
**Tokyo 104 (JP)**
• **HITACHI METALS, LTD.**
**Chiyoda-ku, Tokyo (JP)**

(72) Inventors:
• **Odaka, Fumio**
**Niiza-shi, Saitama-ken (JP)**
• **Tanuma, Eigo**
**Yokohama-shi, Kanagawa-ken (JP)**

• **Ishibashi, Masao**
**Tokyo (JP)**

(74) Representative:
**Stoner, Gerard Patrick et al**
**MEWBURN ELLIS**
**York House**
**23 Kingsway**
**London WC2B 6HP (GB)**

(56) References cited:
**EP-A- 0 463 437**

• **CHEMICAL ABSTRACTS, vol. 108, no. 22, May**
**1988, Columbus, Ohio, US; & JP - A - 63011585**
**(KOBE STEEL)**
• **PATENT ABSTRACTS OF JAPAN, vol. 10, no. 112**
**(C-342)(2169), 25 April 1986; & JP - A - 60241917**
**(BRIDGESTONE K.K.)**

**Description**

This invention relates to a method of preparing high-temperature ceramic filters and filters obtainable by such a method, particularly such as are used in the filtration of molten metals, typically molten stainless steel alloy, molten steel and molten cast steel.

Molten metals generally contain impurities in the form of inclusions which have not been removed during refinement. In order to obtain high-grade metal stocks intended for thin plate manufacture, thin wire drawing, and the precision casting, it is necessary to remove such inclusions, typically by passing the molten metals through filters.

Used in the prior art for the filtration of molten metals are ceramic foams having internal open cells. Such conventional ceramic filters, however, have many problems on use for the filtration of molten stainless steel alloy, molten steel and molten cast steel and few filters heretofore available are satisfactory for practical use. This is because the filters are subject to very rigorous conditions in terms of temperature in that the molten metal to be filtered is as hot as about 1,500°C or higher, which requires a strict choice of the material and structure capable of withstanding thermal shocks generated at the instant when the hot molten metal reaches the filter as well as damages and wear due to collision with the hot molten metal. There are known filters formed of oxide and non-oxide system ceramics.

One known example of non-oxide system ceramics is a filter based on silicon carbide as disclosed in Japanese Patent Application Kokai (JP-A) No. 197829/1985. This filter is resistant against thermal shocks, but its use in the ambient atmosphere is limited to 1,450°C above which silicon carbide decomposes. Then the filter is compatible with molten cast steel, but not with the casting of stainless steel alloy which requires the filter to withstand a temperature of at least 1,500°C, sometimes at least 1,600°C during casting. In addition, long-term operation is not recommended since silicon carbide can react with iron at such elevated temperatures.

As for oxide system ceramics, JP-A 137073/1991 discloses a ceramic composition based on zirconia. This ceramic undergoes crystallographic transformation with temperature change, owing to the presence of monoclinic system zirconia, generating cracks. The ceramic also has a high coefficient of thermal expansion due to the co presence of isometric system crystals so that its spalling resistance is below expectation. To prohibit cracking due to crystallographic transformation, it was proposed to add alumina to zirconia as disclosed in JP-A 141666/1986. This composition has a high coefficient of thermal expansion due to the presence of alumina, and cannot accommodate for the filtration of molten metal at 1,500°C or higher as required for stainless steel alloy casting.

Also, JP-A 278235/1987 discloses a silica/alumina/zirconia system, which will fail upon instantaneous casting of molten metal at 1,500°C or higher since it has a high coefficient of thermal expansion and cannot tolerate thermal shocks.

As understood from the foregoing description, the thermal shock resistance or the ability to withstand heat of molten metal is correlated with not only heat resistance, but also a coefficient of thermal expansion as expressed by the following formula:

$$R = S(1 - \nu)\lambda/E\alpha$$

wherein R is coefficient of thermal shock resistance, S is strength, $\alpha$ is coefficient of thermal expansion, $\nu$ is Poisson's ratio, E is Young's modulus and $\lambda$ is heat transfer rate.

Therefore, materials having a low coefficient of thermal expansion must be used where thermal shock resistance is required. When hot molten metal is cast on the above-mentioned exemplary materials at room temperature, they cannot tolerate such a great temperature difference and fail because they have a substantial coefficient of thermal expansion, despite their good heat resistance.

In this regard, there were proposed systems using cordierite or aluminium titanate having a low coefficient of thermal expansion. Although cordierite itself has a coefficient of thermal expansion of $2 \times 10^{-6}$/°C which is as low as about 1/4 or 1/5 of those of the above-mentioned zirconia and alumina and is thus useful as a thermal shock resistant material, a ceramic filter based on cordierite is practically limited to molten metals at temperatures below 1,300°C because cordierite has a relatively low melting point of 1,450°C.

An aluminium titanate based ceramic is disclosed in JP-A 74981/1988. According to this disclosure, a powder raw material and a blowing agent are concurrently blended and expanded and fired to form a porous body. Since the blowing agent in the form of an organic material is blended in an amount as large as about 40% by weight, the ceramic forming the skeleton after firing has an inhomogeneous structure rather than a dense structure. Since it is difficult to control the cells or network formed by blowing, there is obtained a porous body across which a considerable pressure loss occurs.

High performance criteria for a high-temperature ceramic filter therefore include heat resistance, low thermal expansion, thermal shock resistance against molten metals above 1,500°C such as molten stainless steel alloy, low clogging and low pressure loss, desirably all in combination.

The present invention aims to provide new high-temperature ceramic filters and methods of making and using them.

Making investigations on a three-dimensional reticulated ceramic foam having open cells, particularly when prepared by applying a slurry of a ceramic composition to a substrate in the form of a synthetic resin foam, removing excess slurry, drying and firing the coated substrate, the inventors found that excellent filters can be attained when the ceramic composition is of a system comprising 20 to 70 parts by weight of aluminum titanate, 10 to 50 parts by weight of mullite and 5 to 25 parts by weight of alumina, and the ceramic filter has a bulk specific gravity of 0.5 to 1 and contains 6 to 20 cells per 2.5 cm.

As is well known, a three-dimensional reticulated ceramic foam having open cells is preparable by applying a ceramic slurry to a substrate in the form of a synthetic resin foam, removing excess slurry, drying and firing the coated substrate. In order that the ceramic foam have a sufficient strength to withstand filtration of molten metal, a large quantity of the ceramic slurry must be applied to the synthetic resin foam. Thick coating, however, often leads to clogging of open cells resulting in an increased pressure loss. Quite unexpectedly, when the ceramic composition is of a system of aluminum titanate, mullite and alumina in a blending proportion as defined above, and particularly when the mullite is an electrically fused one, a slurry of this ceramic composition has good slurry properties, leading to a substantially clogging-free ceramic filter having a bulk specific gravity (ratio of the density to the density of water at 4°C) of 0.5 to 1 and 6 to 20 pores per 2.5 cm. Such a ceramic filter has a low pressure loss and good filtering performance.

Furthermore, ceramics resulting from the above-defined blending proportion has a coefficient of thermal expansion which is unexpectedly lower than the value expected from the coefficients of the respective components and their blending proportion. The low coefficient, combined with satisfactory heat resistance and high strength permits the ceramic material to withstand thermal shocks, e.g. by molten metals at about 1,500°C or higher, inter alia molten stainless steel alloy at about 1,600°C. In addition, the ceramic material is resistant against attack by molten metals. With this combination of attributes in one material, the ceramic filter is able to be advantageously used for the filtration of molten metals.

Accordingly, one aspect of the invention provides a method of preparing a high-temperature ceramic filter having a three-dimensional reticulated skeleton structure, with the steps defined in claim 1. Preferred steps are defined in claims 2 to 6.

The invention also contemplates filters obtainable by such a method and the use of such filters for the filtration of molten metal.

## DETAILED DESCRIPTION

The high-temperature ceramic filter is formed from a ceramic composition of an aluminum titanate-mullite-alumina system.

Aluminum titanate has higher heat resistance and lower thermal expansion than cordierite. The present blend allows aluminum titanate to fully exert such characteristics. Aluminum titanate is blended in an amount of 20 to 70 parts, preferably 30 to 60 parts by weight per 100 parts by weight of the ceramic composition. Less than 20 parts by weight of aluminum titanate provides less contribution to the lowering of a coefficient of thermal expansion. More than 70 parts by weight of aluminum titanate can invite a considerable lowering of strength due to the crystallographic transformation of aluminum titanate during firing.

The aluminum titanate is preferably in powder form having a mean particle size of 3 to 10 $\mu$m. Also preferably it contains an iron compound such as iron oxide as an iron element in an amount of 1 to 8% by weight of the aluminium titanate component. Aluminium titanate has a crystallographic behaviour such that during firing, intragranular cracks tend to develop on cooling after heating. Such cracks cause a substantial lowering of mechanical strength or a failure. Addition of an iron compound is effective for preventing this behavior. Although the exact mechanism is unknown, the iron compound is effective for preventing cracks from generating due to crystallographic transformation.

Mullite is relatively low in thermal expansion and is used for the purpose of stabilizing a ceramic slurry and the heat resistance thereof. Mullite is blended in an amount of 10 to 50 parts, preferably 20 to 45 parts by weight per 100 parts by weight of the ceramic composition. A ceramic composition containing less than 10 parts of mullite leads to a porous body which tends to be clogged and less heat resistant. A ceramic composition containing more than 50 parts of mullite can be eroded by molten metals, especially molten ferrous metals when immersed for a long time because mullite contains a silica moiety. As the mullite component, silica and alumina may be blended in a ceramic slurry so as to form mullite through reaction upon firing.

Alumina is added as a firing binder and effective for improving the heat resistance and strength of the resulting ceramic. Alumina is blended in an amount of 5 to 30 parts, preferably 10 to 25 parts by weight per 100 parts by weight of the ceramic composition. Less than 5 parts of alumina is less effective as a firing binder, resulting in a fired ceramic material having low strength. More than 30 parts of alumina contributes to higher strength, but provides a too higher coefficient of thermal expansion, detracting from thermal shock resistance.

Both mullite and alumina preferably have a mean particle size of 5 to 20 $\mu$m. A preferred mullite is an electrically fused one. In order to protect the ceramic filter from damage , the filter needs a thick structural skeleton.

To this end, the bulk specific gravity must be increased. In preparing a ceramic filter from a system using a synthetic resin foam as a substrate, there is a tendency that an increase in bulk specific gravity is accompanied by clogging. This tendency is reduced by using electrically-fused mullite, enabling clogging to be prevented so that a pressure loss is reduced without detracting from other physical properties.

The high-temperature ceramic filter has a bulk specific gravity of 0.5 to 1, preferably 0.6 to 0.8, and contains 6 to 20 pores per 2.5 cm, preferably 6 to 13 pores per 2.5 cm in order to ensure adequate properties for the filtration of molten metal. A bulk specific gravity of less than 0.5 corresponds to a skeleton too thin to tolerate the pressure of molten metal. A bulk specific gravity of more than 1 leads to frequent clogging and hence a higher pressure loss, which requires a longer filtration time or invites less smooth outflow of molten metal. A filter containing less than 6 pores per 2.5 cm is insufficient to remove inclusions from molten metal whereas a filter containing more than 20 pores per 2.5 cm has a skeleton too thin to tolerate the pressure of molten metal.

The ceramic filter generally has a coefficient of thermal expansion not above $3.5 \times 10^{-6}/°C$. A coefficient of thermal expansion above this limit would lead to lower thermal shock resistance.

In general, a composite material has a coefficient of thermal expansion which is determined from the blending proportion of individual components. This calculation is based on the hypothesis that the respective components do not react with each other. In the present material, however, aluminum titanate changes its crystallographic system at a firing temperature, particularly when fired at 1,600°C or higher. More specifically, when fired at 1,600 to 1,650°C or higher, aluminum titanate changes to crystals grown in the c axis direction which are noticeably different from the crystallographic structure as initially blended. As a result, the ceramic material as fired has a coefficient of thermal expansion which is lower than the value calculated from the blending proportion of the respective components. A lower coefficient of thermal expansion contributes to an improvement in thermal shock resistance.

The high-temperature ceramic filter may be prepared by a conventional method involving the steps of starting with a synthetic resin foam as a substrate, applying a slurry of the above-defined ceramic composition to the substrate, removing excess slurry, drying and firing the coated substrate. The preferred synthetic resin foam is a flexible reticulated (cell membrane-free) polyurethane foam.

The slurry is prepared by dispersing the ceramic composition in water together with a binder such as polyvinyl alcohol and carboxymethylcellullose (CMC) and a deflocculant such as quebrachio. Since the ceramic composition contains aluminum titanate, mullite and alumina with the alumina serving as a firing binder, the firing temperature must be as high as 1,650°C to 1,750°C. In general, firing at 1,600°C or higher requires a furnace whose structure is significantly different from ordinary firing furnaces designed for lower than 1,600°C and thus leads to cost increases including both installation investment and maintenance cost. It is thus recommended to use a firing aid in the form of a metal oxide eutectic with alumina such as oxides of alkali and alkaline earth metals. The metal oxide firing aid is preferably added in an amount of 0.05 to 3 parts by weight per 100 parts by weight of the ceramic composition whereby the firing temperature can be lowered by about 30 to 100°C. Less than 0.05 parts of the firing aid would be ineffective. More than 3 parts of the firing aid can further lower the firing temperature, but would promote alumina grain growth or vitrification, adversely affecting heat resistance and a coefficient of thermal expansion.

The slurry has a viscosity which may be adjusted by the amount of water in accordance with the desired cell size and bulk specific gravity of a ceramic porous body although the viscosity is generally in the range of 150 to 250 poise, especially 170 to 200 poise.

In the slurry is immersed a synthetic resin foam, for example, a polyurethane foam of a three-dimensional reticulated (cell membrane-free network) skeleton structure having 6 to 20 cells per 2.5 cm. After immersion, excess slurry is removed from the foam by any suitable method such as roll pressing, centrifugal separation and air blowing.

The coated foam is then dried and fired at a temperature of 1,600 to 1,750°C. Firing can be done at 1,500 to 1,720°C when a firing aid as mentioned above is additionally blended.

EXAMPLE

Examples of the present invention are given below by way of illustration and not by way of limitation. All parts are by weight.

Example 1

To 60 parts of aluminum titanate powder, 30 parts of electrically fused mullite, and 10 parts of alumina were added 4 parts of polyvinyl alcohol, 0.1 parts of quebrachio, 0.05 parts of calcium carbonate and 18 parts of water. There was obtained a ceramic slurry having a viscosity of 180 poise. In the slurry was immersed a polyurethane foam having a three-dimensional reticulated skeleton structure dimensioned $6 \times 6 \times 2$ cm and containing 6 cells per 2.5 cm.

After excess slurry was removed by means of a roll, the foam was dried for 6 hours at 60°C. The foam was then fired at 1,630°C, obtaining a ceramic filter of 5.2 × 5.2 × 1.8 cm.

The ceramic filter was measured for bulk specific gravity, a coefficient of thermal expansion over 25 to 800°C, flexural strength, a pressure loss at 10 cm/s., and hot distortion, and tested for resistance against thermal shocks by molten metal.

The hot distortion was determined by supporting a sample at opposite ends at a span of 100 mm, allowing the sample to stand at 1,600°C for 30 minutes, and measuring a distortion amount at the center.

The thermal shock resistance was tested by casting 35 kg of molten stainless steel alloy at a temperature of 1,600°C to the ceramic filter. After cooling down, the filter was sectioned to observe visually any breakage of the filter. The filter was rated "◯" or "X" according to the following criterion.

◯ : Filter skeleton remained sound without a change
X : Filter cracked, softened and/or spalled.

The results are shown in Table 1.

Examples 2-4 & Comparative Examples 1-3

Ceramic filters were prepared by the same procedure as in Example 1 except that the amounts of aluminum titanate, mullite, and alumina were changed as shown in Table 1. Physical properties were similarly measured. The results are also shown in Table 1.

Table 1

|  | Example | | | | Comparative Example | | |
|---|---|---|---|---|---|---|---|
|  | 1 | 2 | 3 | 4 | 1 | 2 | 3 |
| Composition (pbw) | | | | | | | |
| Aluminum titanate | 60 | 30 | 70 | 50 | 80 | 30 | 90 |
| Mullite | 30 | 45 | 20 | 45 | 15 | 40 | 5 |
| Alumina | 10 | 25 | 10 | 5 | 5 | 30 | 5 |
| Physical properties | | | | | | | |
| Bulk specific gravity | 0.62 | 0.63 | 0.59 | 0.60 | 0.62 | 0.63 | 0.61 |
| Coefficient of thermal expansion ($10^{-6}$/°C) | 0.2 | 2.4 | 1.1 | 1.7 | 0.5 | 3.8 | 0.5 |
| Flexural strength (kg/cm$^2$) | 11.0 | 14.4 | 10.5 | 11.5 | 5.5 | 12.5 | 4.5 |
| Pressure loss (mmAq) | 51 | 49 | 53 | 50 | 65 | 53 | 70 |
| Hot distortion (mm) | 0.1 | 0.1 | 0.2 | 0.2 | 0.5 | 0.4 | 0.6 |
| Thermal shock resistance | ◯ | ◯ | ◯ | ◯ | X | X | X |

As is evident from Table 1, when the proportions of aluminum titanate, mullite, and alumina blended are within the ranges prescribed herein, there are obtained ceramic filters having a coefficient of thermal expansion below $3.5 \times 10^{-6}$/°C, reduced hot distortion which is a measure of heat resistance, and improved thermal shock resistance as demonstrated by retained soundness after pouring of molten metal. In contrast, ceramic filters in which the ceramic blending proportions were outside those prescribed ranges (Comparative Examples 1-3) were less resistant against heat and thermal shocks.

ADVANTAGES

High-temperature ceramic filters embodying the invention were thus found to have excellent heat resistance, a low coefficient of thermal expansion, improved thermal shock resistance and a low pressure loss. The filters are thus advantageously used for the filtration of molten metals, typically molten stainless steel alloy, molten steel and molten cast steel.

**Claims**

1. A method of preparing a high-temperature ceramic filter having a three-dimensional reticulated skeleton structure, the method comprising the steps of:

   (i) preparing a slurry of a ceramic composition comprising 20 to 70 parts by weight of aluminium titanate, 10 to 50 parts by weight of mullite and 5 to 25 parts by weight of alumina;

   (ii) applying the slurry to a substrate in the form of a synthetic resin foam to form a three-dimensional reticulated skeleton structure having 6 to 20 cells per 2.5cm;

   (iii) removing excess slurry; and

   (iv) drying and firing the coated substrate to produce a ceramic filter, the viscosity of the slurry being adjusted such that the bulk specific gravity of the filter is 0.5 to 1.

2. A method according to claim 1 wherein the mullite is an electrically fused mullite.

3. A method according to claim 1 or claim 2 wherein the aluminium titanate contains an iron compound in an amount corresponding to 1 to 8% by weight elemental iron.

4. A method according to any one of the preceding claims wherein the coated substrate is fired at a temperature of 1,600 to 1,750°C.

5. A method according to any one of the preceding claims wherein an oxide of alkali metal or alkali earth metal is blended in the ceramic composition in an amount of 0.05 to 3 parts by weight per 100 parts by weight of the ceramic composition and the coated substrate is fired at a temperature of 1,500 to 1,720°C.

6. A method according to any one of the preceding claims wherein mullite is provided as silica and alumina blended in the ceramic slurry to form mullite through reaction on firing.

7. A filter obtainable by a method according to any one of the preceding claims.

8. A filter according to claim 7 which has a coefficient of thermal expansion not greater than $3.5 \times 10^{-6}/°C$.

9. Use of a filter, as defined in claim 7 or 8, for the filtration of molten metal.

**Patentansprüche**

1. Verfahren zur Herstellung eines Hochtemperatur-Keramikfilters mit dreidimensionaler netzartiger Skelettstruktur, wobei das Verfahren die folgenden Schritte umfasst:

   (i) Herstellen einer Aufschlämmung einer Keramikzusammensetzung, umfassend 20 bis 70 Gew.-Teile Aluminiumtitanat, 10 bis 50 Gew.-Teile Mullit und 5 bis 25 Gew.-Teile Aluminiumoxid;

   (ii) Aufbringen der Aufschlämmung auf ein Substrat in Form eines synthetischen Harzschaums, um eine dreidimensionale netzartige Skelettstruktur mit 6 bis 20 Zellen pro 2,5 cm zu bilden;

   (iii) Entfernen überschüssiger Aufschlämmung; und

   (iv) Trocknen und Brennen des beschichteten Substrats, um einen Keramikfilter zu fertigen, wobei die Viskosität der Aufschlämmung solcherart eingestellt wird, dass das spezifische Gesamtgewicht des Filters 0,5 bis 1 beträgt.

2. Verfahren nach Anspruch 1, worin der Mullit ein elektrisch geschmolzener Mullit ist.

3. Verfahren nach Anspruch 1 oder 2, worin das Aluminiumtitanat eine Eisenverbindung in einer Menge enthält, die 1 bis 8 Gew.-% elementarem Eisen entspricht.

**4.** Verfahren nach einem der vorhergehenden Ansprüche, worin das beschichtete Substrat bei einer Temperatur von 1.600 bis 1.750°C gebrannt wird.

**5.** Verfahren nach einem der vorhergehenden Ansprüche, worin ein Alkalimetall- oder Erdalkalimetalloxid der Keramikzusammensetzung in einer Menge von 0,05 bis 3 Gew.-Teilen pro 100 Gew.-Teile der Keramikzusammensetzung beigemengt und das beschichtete Substrat bei einer Temperatur von 1.500 bis 1.720°C gebrannt wird.

**6.** Verfahren nach einem der vorhergehenden Ansprüche, worin Mullit als Siliziumoxid und Aluminiumoxid vorgesehen wird, die der keramischen Aufschlämmung beigemengt werden, um Mullit durch Reaktion beim Brennen zu bilden.

**7.** Durch ein Verfahren nach einem der vorhergehenden Ansprüche erhaltbarer Filter.

**8.** Filter nach Anspruch 7, der einen Wärmedehnungskoeffizienten von höchstens $3,5 \times 10^{-6}/°C$ besitzt.

**9.** Verwendung eines Filters nach Anspruch 7 oder 8 zum Filtern von geschmolzenem Metall.

**Revendications**

**1.** Méthode de préparation d'un filtre en céramique pour températures élevées ayant une structure de squelette réticulée tridimensionnelle, la méthode comprenant les étapes de:

(i) préparation d'une boue de composition de céramique comprenant 20 à 70 parties en poids de titanate d'aluminium, 10 à 50 parties en poids de mullite et 5 à 25 parties en poids d'alumine;
(ii) application de la boue à un substrat sous la forme d'une mousse de résine synthétique pour former une structure de squelette réticulée tridimensionnelle ayant 6 à 20 cellules par 2,5 cm;
(iii) élimination de la boue en excès; et
(iv) séchage et calcination du substrat revêtu pour produire un filtre en céramique, la viscosité de la boue étant ajustée de sorte que la densité apparente du filtre vaut de 0,5 à 1.

**2.** Méthode selon la revendication 1 dans laquelle la mullite est une mullite fondue électriquement.

**3.** Méthode selon la revendication 1 ou la revendication 2 dans laquelle le titanate d'aluminium contient un composé de fer en une quantité correspondant à 1 à 8 % en poids de fer élémentaire.

**4.** Méthode selon l'une quelconque des revendications précédentes dans laquelle le substrat revêtu est calciné à une température de 1600 à 1750°C.

**5.** Méthode selon l'une quelconque des revendications précédentes dans laquelle un oxyde d'un métal alcalin ou d'un métal de terre alcaline est mélangé dans la composition de céramique en une quantité de 0,05 à 3 parties en poids pour 100 parties en poids de la composition de céramique et le substrat revêtu est calciné à une température de 1500 à 1720°C.

**6.** Méthode selon l'une quelconque des revendications précédentes dans laquelle la mullite est fournie sous la forme de silice et d'alumine mélangées dans la boue de céramique pour former la mullite par réaction lors de la calcination.

**7.** Filtre qui peut être obtenu par une méthode selon l'une quelconque des revendications précédentes.

**8.** Filtre selon la revendication 7 qui a un coefficient d'expansion thermique non supérieur à $3,5 \times 10^{-6}/°C$.

**9.** Utilisation d'un filtre, tel que défini dans la revendication 7 ou 8, pour la filtration d'un métal fondu.